# EUROPEAN PATENT APPLICATION

(11) **EP 3 770 097 A1**
(43) Date of publication of application: **27.01.2021**
(21) Application number: 19188495.6
(22) Date of filing: 26.07.2019
(51) Int. Cl.: B66B 9/00, B66B 1/30, B66B 11/04, B66B 23/02, H02K 41/03

(54) **CONVEYOR FOR PASSENGERS OR GOODS WITH A LINEAR MOTOR**

(71) Applicant: KONE Corporation, 00330 Helsinki (FI)
(72) Inventor: KORHONEN, Tuukka, 00330 Helsinki (FI); KALLIONIEMI, Antti, 00330 Helsinki (FI); PIITULAINEN, Henry, 00330 Helsinki (FI)
(74) Representative: Glück Kritzenberger Patentanwälte PartGmbB

(57) **Abstract**

The invention relates to a conveyor (10) for passengers and/or goods, the conveyor (10) comprising at least one linear electric motor formed by linear stator beams (1; 26a,b, 28a,b) with stator poles (8; 74, 78) being located in a fixed correlation to an environment, and at least one mover (22, 24) coacting and moving along the stator beams (1; 26a,b, 28a,b), the stator beams comprising at least a first stator beam (28a,b) extending in a first movement path in a first direction of the passenger conveyor (10) and at least a second stator beam (26a,b) extending in a second movement path in a second direction of the passenger conveyor (10), wherein the first direction and the second direction are different directions, selected from the group of horizontal, inclined and vertical direction, and which mover is adapted to face the respective stator poles of the stator beam, wherein the mover (22, 24) has at least one winding (66,68) arranged to co-act with the stator poles (8); the linear motor being controlled by a motor drive, which is controlled by a drive control. The drive control comprises a set of control parameters, and whereby the drive control is configured to use at least partly different set of control parameters when associated with the first stator beam (26a,b) than with the second stator beam (28a,b), and which drive control (88) is further connected with an input for the position of the mover (22,24), and that the drive control is configured to select the control signals for the mover dependent on the location of the mover on either the first or second stator beam.

## Description

### Background of the invention

The present invention relates to a conveyor for passengers and/or goods, the conveyor comprising at least one linear electric motor formed by linear stator beams with stator poles being located in a fixed correlation to an environment, and at least one mover co-acting and moving along the stator beams, the stator beams comprising at least a first stator beam extending in a first movement path in a first direction of the passenger conveyor and at least a second stator beam extending in a second movement path in a second direction of the passenger conveyor, wherein the first direction and the second direction are different directions, selected from the group of horizontal, inclined and vertical direction. The mover is adapted to face the respective stator poles of the stator beam and has at least one winding arranged to co-act with the stator poles. The linear motor is controlled by a motor drive which motor drive is controlled by a drive control, whereby the drive control comprises a set of control parameters. In such a conveyor, particularly a high rise elevator, where several cars drive in vertical and horizontal trajectories the drive control of the cars on the at least two different stator beams is complicated.

### Summary of the invention

This object is solved with a conveyor according to claim 1 and a method according to claim 12. Preferred embodiments of the invention are subject-matter of the corresponding dependent claims. Embodiments of the invention are also shown in the description and in the drawings.

According to the invention the conveyor for passengers and/or goods comprises at least one linear electric motor formed by linear stator beams with stator poles being located in a fixed correlation to an environment. The linear motor further comprises at least one mover co-acting and moving along the stator beams. The stator beams comprise at least a first stator beam extending in a first movement path in a first direction of the passenger conveyor and at least a second stator beam extending in a second movement path in a second direction of the passenger conveyor. In this context the first direction and the second direction are different directions, selected from the group of horizontal, inclined and vertical direction. The mover is adapted to face the respective stator poles of the stator beam and has at least one winding arranged to co-act with the stator poles. The linear motor is controlled by a motor drive, and the motor drive is controlled by a drive control, whereby the drive control comprises a set of control parameters. The drive control is further connected with an input for the position of the mover or elevator car to which the mover(s) is/are mounted.

According to the invention the drive control is configured to use at least partly different set of control parameters when associated with either the first or the second stator beam. Therefore, the drive control is configured to select the control parameters for the mover dependent on the location of the mover on either the first or second stator beam. This means, that the drive control is configured to use different control parameters dependent on location of the mover on the first or second stator beam.

For example if the mover (along with the car or steps of an escalator or moving walks runs along a horizontal or tilted stator beam the d-axis magnetization can be selected much higher than the q-axis magnetization of the mover, i.e. its different mover parts facing the different stator faces. In this context, the d-axis magnetization defines the attraction force between the mover, i.e. its different mover parts and the stator beam, whereas the q-axis magnetization defines the propulsion force between them. Additionally the d-axis magnetization of the different mover parts facing opposite stator beam faces can be adjusted differently at least with respect to the d-axis magnetization. This allows the compensation of the gravitational force acting on the mover with a direction component normal to the stator beam. So, on the vertical stator beam the different mover parts can be magnetized preferably with the same d-axis and q-axis magnetization, as here the gravitational force is acting in the direction of the stator beam and has not to be compensated with the d-axis magnetization. Also here the q-axis magnetization can be controlled to be much higher than the d-axis magnetization.

In summary, the drive control is able to adjust the attraction force (d-axis-magnetization) and the propulsion force (q-axis magnetization) according to the orientation of the different stator beams in the environment, e.g. elevator shaft.

Preferably, the drive control comprises a model, particularly a magnetic model, of the motor which facilitates the use of a vector control of the linear motor. This again allows an easy independent control of the q-axis and d-axis magnetization of each active side of the mover. Accordingly, the drive control and motor drive are configured to provide control signals for the mover by means of the control model, which is optimized with respect to the d-axis and q-axis magnetization of the different active mover faces on the differently orientated stator beams.

In a preferred embodiment of the invention the stator beam comprises at least two side faces located at opposite sides of the stator beam, each of the side faces carrying a corresponding stator beam with ferromagnetic poles spaced apart by a pitch , and which mover comprises at least two opposite counter-faces facing the respective stator beams on the opposite side faces of the stator beam. In this case preferably each counter-faces of the mover has at least one mover unit with at least one winding and at least one permanent magnet, which are arranged to co-act with the ferromagnetic poles of the stator beams on the respective side face of the stator beam. With this embodiment, the geometric arrangement of side faces and counter faces is optimized to compensate for gravitational forces acting in a direction deviating from the stator beam direction, i.e. in the horizontal and inclined stator beams (first or second stator beam).

Of course the drive control is further connected with an input for the position of the elevator car and/or mover to be able to set the control parameters/signal according to the current position of the mover on the first or second stator beam. Preferably, the drive control and motor drive are configured to provide different control parameters and/or signals for the opposite mover counter-faces. The drive control is further configured to select the difference between the control parameters and/or signals for the two opposite counter faces dependent on the location of the elevator car/mover on either the first or second stator beam. This allows the generation of different attraction forces between mover and stator beam on the two opposite sides, i.e. the respective stator faces and counter-faces, of the stator beam as to compensate for all forces, e.g. gravitational forces, deviating from the stator beam direction, which is the case in the inclined or horizontal stator beams.

In a preferred embodiment of the invention the stator poles of the stator beams are permanent magnets, such as Halbach arrays, and that the at least one winding of the mover is an air-core winding. This is a very efficient type of a linear motor which allows sophisticated control, e.g. via vector control, based on the use of a magnetic model.

Preferably, the width and/or height and / or length (d) and / or material of the stator poles of the first stator beam is different from the width and/or height and / or length and / or material of the second stator beam. In this case the different control parameters intended to cope with gravitational forces acting in a direction different from the stator beam is in a synergetic manner supported by the different geometry of the first and second stator beams. Thus, the stator beams which are extending with a horizontal component may have stator poles on the upper side which are larger than those on the lower side as to compensation for the gravitational force acting in downwards direction.

Generally, the conveyor may be any goods or passenger conveyor as e.g. a moving sidewalk, a moving ramp, an escalator or an elevator. Most advantageously the conveyor is an elevator, particularly a high-rise elevator, where the gravitational force acting on the elevator car and thus on the movers is most relevant for a smooth function of the elevator system independent of the direction of the corresponding stator beam.

Preferably, the first direction is horizontal direction, whereas the second direction is vertical direction. This meets the circumstances in an elevator system where two adjacent vertical shafts are connected by horizontal passages, which system is preferable particularly for high rise buildings. In this case the first stator beam is horizontal stator beam and that the second stator beam is vertical stator beam.

Preferably, the linear motor comprises a longitudinal stator beam (the at least two stator beams of the conveyor) at least one mover, better two or four movers, adapted to move along the stator beam(s). The stator beam(s) comprise(s at least two side faces located at opposite sides thereof, each of the side faces carrying ferromagnetic poles spaced apart by a pitch. The mover comprises at least two counter-faces facing the respective side faces of the stator beam. The mover has in at least one of said counter-faces at least one mover unit having at least one winding and at least one permanent magnet, which are arranged to co-act with the ferromagnetic poles of the respective side face of the stator beam. The mover has in each of said counter-faces at least one mover unit having at least one winding and at least one permanent magnet, which are arranged to co-act with the ferromagnetic poles of the respective side face of the stator beam. According to an embodiment of the linear motor, the mover has in the other counter face permanent magnets but no windings. A counter face with permanent magnets only is not considered as a "mover unit" as no propulsion force may be generated in the travelling direction of the mover. This kind of electric linear motor is comparably cheap to manufacture and which is well adapted also for long movement paths. This also enables the controlling of the linear motor to reduce friction between stator and mover(s) without additional components. This means that also more effective (e.g. due to reduced friction losses), simple and reliable linear motor and / or linear motor drive control is provided.

The term " mover unit" means independently controllable mover entity. Thus the winding(s) of said mover unit is / are configured to be supplied, with a separate controllable drive unit like inverter such that independent control of current of the winding(s) is possible. The linear motor is configured according to some embodiments of the invention to enable air gap control interlinked with movement control in the travelling direction, with windings of the mover units, such that mover may be levitated around the stator beam while travelling along the stator beam.

The feature "at least two side faces located at opposite sides of the stator beam" can mean that surface normals of said at least two side faces both have a vector component such that said vector components are in opposite directions. Therefore, attraction force components in opposite directions may be generated between the at least two mover units and the ferromagnetic poles of the respective side faces of the stator beam, to enable air gap control of the mover in relation to the stator beam. According to a preferred embodiment of the invention, the at least one mover unit comprises at least one winding and at least one permanent magnet. Preferably, the at least one mover unit comprises permanent magnets and a three-phase winding. Additionally or alternatively, the at least one mover unit may comprise a one-phase winding. According to an embodiment of the linear motor, each mover unit comprises at least one permanent magnet and at least one winding. In a preferred embodiment each mover unit comprises permanent magnets and motor winding, most preferably three-phase motor winding. The side-faces carrying ferromagnetic poles of the stator beam do not have any permanent magnets as well as no windings either.

Therefore each of said mover units may be controlled independently as regards to controlling d-axis and q-axis current components.

This kind of motor type may be a stator-mounted permanent magnet (SMPM) motor wherein permanent magnet(s) and winding(s) is / are mounted to the mover. One suitable motor type is a flux-switching permanent magnet (FSPM) motor. Other suitable motor types may be, for example, doubly salient permanent magnet (DSPM) motor and flux reversal permanent magnet (FRPM) motor. In an alternative embodiment of a linear motor, the motor may be a hybrid excitation (HE) synchronous machine.

A further essential component of the inventive conveyor is the drive control of the electric linear motor. The drive control preferably comprises at least one drive unit configured to supply electrical power to the respective at least one mover unit of the mover. According to a preferred embodiment of the drive control, it comprises drive units configured to supply electrical power separately to the respective mover units of the mover such that each mover unit is supplied by a separate (at least one) drive unit. This can mean that independently adjustable control currents may be provided to the windings of the mover units at opposite sides of the stator beam, thus enabling air gap control of the motor. According to an embodiment, the drive units may have a common DC link to share regenerative power (e.g. braking power) between the mover units.

The conveyor may be an elevator system, in which case the load-receiving part may be an elevator car, an elevator car sling or corresponding. The load receiving part may be configured to transfer passengers and / or cargo. The conveyor may alternatively be an escalator, in which case the load-receiving part may be an escalator step band or portion of the step band. The conveyor may alternatively be a moving walk, in which case the load-receiving part may be the moving band or portion of the moving band. The conveyor may alternatively be a belt conveyor, in which case the load receiving part may be belt of the belt conveyor. The conveyor may alternatively be a vehicle or a train, in which case the load-receiving part may be mobile body or consist.

In a preferred embodiment of the linear motor the at least one mover unit has winding and permanent magnets. The method comprises supplying, by means of the at least one drive unit a d-axis current component to the winding of the at least one mover unit to adjust the length of air gap towards given reference value (Y_{ref}).

According to a preferred embodiment of the linear motor, the drive control obtains position information of the mutual position of the ferromagnetic poles and the mover unit facing said ferromagnetic poles, the position information being obtained in the travelling direction of the mover unit, representing d, q -coordinate systems of said mover units by means of the position information such that the d-axis of each mover unit is in the direction of the ferromagnetic poles facing the mover unit and the q-axis is orthogonal (i.e. 90 degrees in the electrical angle of the motor) to the d-axis, obtaining information of length of air gap between the ferromagnetic poles and the mover unit(s) facing the ferromagnetic poles, and supplying, by means of the drive units separate d-axis current components to the mover units at the opposite sides of the stator beam to adjust the length of the air gaps towards given reference values, wherein the separate d-axis current components are established based on the difference between air gap reference value and obtained air gap length information. The phrase "obtaining position information of the mutual position of the ferromagnetic poles and the mover unit facing said ferromagnetic poles" means that said position may be measured with a suitable sensor or, alternatively or additionally, said position may be estimated, for example, from currents and voltages of the winding of a mover unit, to get the position of the ferromagnetic pole(s) relative to the winding. The phrase "mutual position between the ferromagnetic poles and the facing mover unit(s) in the travelling direction of the respective mover unit(s)" means the mutual position as measured in the intended travelling direction of the mover unit, i.e. in the longitudinal direction in which the counter-face of the mover unit travels along the side-face of the stator beam. According to an embodiment, the mover has in at least one counter-face at least two mover units arranged consecutively in the travelling direction, each of said mover units having at least one winding and at least one permanent magnet, which are arranged to co-act with the ferromagnetic poles of the side face facing said mover units.

According to a refinement of the linear motor, the ferromagnetic poles as well as the mover units at the opposite sides of the stator beam are arranged symmetrically at the same level in the transverse direction of the stator beam such that the attractive force components between the mover units and stator beam exist at the same level in the transverse direction of the stator beam.

According to a preferred embodiment of the linear motor, the stator beam comprises at least four side faces located two by two at opposite sides of the stator beam, such that the four side faces substantially cover circumference of the stator beam, each of the side faces carrying ferromagnetic poles spaced apart by a pitch. The mover comprises at least four counter-faces facing the respective side faces of the stator beam. The mover has in each of said counter-faces at least one, preferably at least two mover units having at least one winding and at least one permanent magnet, which are arranged to co-act with the ferromagnetic poles of the respective side face of the stator beam. This can mean that an increased propulsion force may be provided whilelevitating with the linear motor.

According to a preferred embodiment of the linear motor, the ferromagnetic poles are teeth provided on a side face of a ferromagnetic stator rod, which teeth are spaced apart by teeth gaps. The side-faces carrying ferromagnetic poles of the stator beam do not have any permanent magnets as well as no windings either. Therefore the stator is cheap and easy to manufacture, install and maintain.

According to a preferred embodiment of the linear motor, the mover has in at least one, preferably in each of said counter-faces at least two mover units arranged consecutively in the travelling direction, each of said mover units having at least one winding and at least one permanent magnet, which are arranged to co-act with the ferromagnetic poles of the respective side face of the stator beam. This can mean that at least two separate force components may be provided at different locations by means of the mover units such that tilting of air gap may be straightened to keep stator beam and mover separated when simultaneously levitating and driving with the linear motor.

According to a preferred embodiment of the linear motor, at least one of said mover units contains at least two rotors having windings connected in series or in parallel. This can mean that, within an mover unit more uniform force distribution may be provided, both in direction of air gap (attraction force for levitation control of the mover) and in the travelling direction (propulsion force for speed control of the mover). In a refinement, each of said mover units contains at least two rotors having windings connected in series or in parallel to provide even more uniform force distribution.

According to a preferred embodiment of the linear motor, the electric linear motor comprises at least two movers adapted to move along the same stator beam, and the transport system comprises at least two independently movable load-receiving parts, each coupled to a different mover. This can mean that several independently movable load receiving parts may be moved along the same trajectory, such as several cars of a multicar elevator system.

According to a preferred embodiment of the conveyor, it comprises two parallel stator beams and at least two movers adapted to move along different stator beams, and wherein each of the load-receiving parts is coupled to said at least two movers. Therefore propulsion force of the transport system may be increased and load capacity of the load-receiving part may be increased as well.

Preferably the drive control is connected with a load sensor so that the weight and load of the elevator car/escalator can be considered in the generation of the propulsion force (q-axis magnetization).

According to a preferred embodiment of the conveyor, the mover has in each of said counter-faces at least two mover units arranged consecutively in the travelling direction, each of said mover units having at least one winding and at least one permanent magnet, which are arranged to co-act with the ferromagnetic poles of the respective side face of the stator beam. The drive control comprises drive units configured to supply electrical power separately to the respective mover units of the same counter-face. The drive control is performed as follows: By means of the drive units separate d-axis current components are supplied to the mover units of the same counter-face to straighten any tilt of the air gap, whereby the separate d-axis current components are generated based on the difference between an air gap reference value and actual air gap length information. The air gap length may be measured for example with inductive proximity sensors, eddy current sensors or lasers. This means that at least two separate attraction force components may be provided at different locations in length direction of the mover on the same side of the stator beam by means of feeding the mover units with different signals such that tilting of air gap may be straightened to keep the stator beam and the mover separated when levitating and simultaneously driving with the linear motor.

The invention also refers to a method of operating/controlling a conveyor for passengers and/or goods, particularly an elevator system. The conveyor comprises at least one linear electric motor formed by linear stator beams with stator poles being located in a fixed correlation to an environment, and at least one mover co-acting and moving along the stator beams. The stator beams comprises at least one first stator beam extending in a first movement path in a first direction of the passenger conveyor and at least one second stator beam extending in a second movement path in a second direction of the passenger conveyor, wherein the first direction and the second direction are different directions, selected from the group of horizontal, inclined and vertical direction. The mover is adapted to face the respective stator poles of the stator beam and has at least one winding arranged to co-act with the stator poles. The linear motor is controlled by a motor drive which again is controlled by a drive control, whereby the drive control comprises a set of control parameters. According to the invention different control parameters for the drive control are used depending on the location of the mover on the first and second stator beam. With regard to the advantages of this solution it is referred to the description of the inventive conveyor above.

Preferably, the stator beam comprises at least two side faces located at opposite sides of the stator beam, and each of the side faces carries a corresponding stator beam with ferromagnetic poles spaced apart by a pitch. The mover comprises at least two opposite counter-faces facing the respective stator beams on the opposite side faces of the stator beam. The drive control is further connected with an input for the position of the elevator car. According to this advantageous embodiment of the inventive method different control signals/parameters are used for the opposite counter-faces, and the difference between the control signals/parameters of the two opposite counter faces depend on the location of the elevator car on either the first or second stator beam. With this embodiment gravitational forces acting on the mover in a direction deviating from the corresponding stator beam on which the mover is currently running, can be easily compensated.

In an embodiment of the linear motor the winding of the mover unit may be in the form of one coil only.

In a preferred embodiment the method comprises obtaining position information (X_{act}) of the mutual position of the ferromagnetic poles and the at least one mover unit facing said ferromagnetic poles, the position information being obtained in the travelling direction (x) of the mover unit, representing d, q -coordinate system of said at least one mover unit by means of the position information (X_{act}) such that the d-axis of said mover unit is in the direction of the ferromagnetic poles facing the mover unit and the q-axis is orthogonal to the d-axis, obtaining information of length of air gap (Y_{act}) between the ferromagnetic poles and the at least one mover unit facing said ferromagnetic poles, and supplying, by means of the at least one drive unit a d-axis current component to the at least one winding of the at least one mover unit to adjust the length of air gap towards given reference value (Y_{ref}), wherein the d-axis current component is established based on the difference between air gap reference value (Y_{ref}) and obtained air gap length information (Y_{act}).

According to a preferred embodiment of the control method following steps are provided: obtaining travel position information and / or travel speed information of the mover, and feeding with the drive unit(s) to the winding(s) of the mover unit(s) separate q-axis current components based on the difference between travel position reference and obtained travel position information and / or between travel speed reference and obtained travel speed information to adjust the travel position and / or speed towards said position and / or speed reference. The term "travel position information of the mover" means position information in the travel direction of the mover, in which direction the mover travels along the stator beam. Consequently, the term "travel speed information of the mover" means speed information in the travel direction of the mover, in which direction the mover travels along the stator beam. Contrary to prior art control systems, wherein common q-axis current components based on common current reference have been used to adjust propulsion force / speed, by using separate q-axis current components / current references for separate drive units according to the embodiment it is possible to better adapt to different physical conditions of separate drive units (for example different air gaps lengths) to maintain a more even propulsion force between different drive units and thus more accurate and comfortable speed control of the mover.

According to a preferred embodiment the method comprises following steps: calculating the travel speed reference based on difference between a travel position reference and the actual travel position of the mover.

According to a refinement, the method comprises following steps: when changing at least one of d-axis current component and q-axis current component of a mover unit responsive to a change of at least one of the parameters air gap length, travel position information and travel speed information, at the same time a correction term to the other of d-axis current component and q-axis current component is generated/provided to compensate the effect of change to the attraction force and / or propulsion force of the mover.

According to a refinement, the method comprises: calculating a propulsion force reference value based at least on difference between travel position reference and obtained travel position information and / or between travel speed reference and obtained travel speed information of the mover, calculating an attraction force reference value based at least on difference between air gap reference value and air gap length information, and changing at least one of d-axis current component and q - axis current component of a mover unit responsive to change in at least one of propulsion force reference value, attraction force reference value and air gap length information of the mover unit.

The linear motor, drive control and control/operating method has the advantage of reduced losses due to optimized current consumption as well as minimized friction due to levitation. A further advantage is an improved ride comfort due to the reduction of propulsion force ripple. Therefore the linear motor is well suitable e.g. for high rise elevators, particularly for elevators with a height of more than 50 m, preferably of more than 100 m. This linear motor concept is therefore adapted for any high-rise applications as this solution does not need any elevator ropes or counterweight which are an obstacle in the design of high-rise elevators because of the correlated weight.

Preferably, the mover also has a power source as for example a battery or an accumulator, which is preferably also configured as back-up power source for the mover. The power back up is preferably designed for the electro-magnetic power elements of the motor connected with the mover as e.g. windings. Thus, with this power source, all electric loads of the mover can be fed. These loads are in case of an elevator car also the lightings, ventilation, door drives and of any I/O devices of the elevator car as for example car display panels, loudspeakers, displays, etc..

Furthermore, the power of a wireless data connection with any kind of conveyor control can be supplied with this power source. According to an embodiment, the battery / accumulator may be connected to a common DC link of all the drive units associated with the same load-receiving part (e.g. elevator car). The battery may be coupled directly or via a power-interrupting switch to the DC link, and / or there may be a voltage converter between battery and DC link to enable voltage difference between battery / DC link. Preferably, the power supply from the shaft to mover is implemented wirelessly with coupled coils principle, whereby a primary coil being mounted to the environment or stator beam whereas a secondary coil is moving with the car. When the mover arrives at a certain position, primary and secondary are coupled and power is fed from primary to secondary to a battery mounted to the mover. The primary coil may be located in every stopping floor. The term "levitation" in connection with the invention means that an air gap between side-face and respective counter-face is maintained with current adjustment of the mover unit(s). However, within the scope of the invention it may also be possible to use some guide elements to provide assisting guidance for the mover relative to the stator beam. This is especially the case with an embodiment wherein the stator poles of the stator beams are in the form of permanent magnets, such as Halbach arrays, and the at least one winding of the mover is an air-core winding. This kind of arrangement may not produce adequate attraction force between stator beam and the mover to enable levitation control without the guide elements. On the other hand, preferably the levitation may be implemented without any additional guide elements, which saves installation and maintenance costs.

Following expressions are used as a synonym: element - element to be moved elevator car; environment; elevator-shaft - escalator-track; stator poles - stator teeth; electric motor - linear motor; transport system - conveyor; operating method - control method; stator beam - stator rail;

For the skilled person it is obvious that components mentioned in connection with the present invention can be provided one one-fold or multi-fold according to the needs. For example, one stator beam can co-act with three movers located above each other at the element to be moved. Furthermore, two stator beams may be located at a wall of the environment or even more than two stator beams as e.g. three or four stator beams.

The features of different embodiments of the invention can be applied in connection with other embodiments within the scope of the basic inventive concept.

### Brief description of the drawings

The invention is now described hereinafter with respect to the enclosed drawing. In this drawing
- Fig. 1: a side view of an elevator with two elevator shafts having vertical and horizontal stator beams acting together with movers pivoted at several elevator cars moving in those shafts,
- Fig. 2: a horizontal cross-section in the corner area between the elevator shaft and the elevator car showing a rotatable stator beam part co-acting with a rotatably pivoted mover of the elevator car,
- Fig. 3: a vertical stator beam co-acting with a mover of the elevator car,
- Fig. 4: a vertical schematic drawing indicating a linear FSPM mover co-acting with a stator beam having downwards inclined stator teeth,
- Fig. 5: an enlarged vertical side view of a vertical stator beam comprising curved and downwards extending stator teeth, and
- Fig. 6: a horizontal stator beam with a different geometry of upper and lower stator teeth working together with an FSPM mover.
- Fig. 7A: shows a side view of an embodiment of an electric linear motor for use in the inventive conveyor,
- Fig. 7B: shows a side view of another embodiment of the electric linear motor,
- Fig. 8A: shows a cross-section through a stator beam and a mover of Fig. 1,
- Fig. 8B: shows a cross-section through a stator beam and a mover of Fig. 1 of an alternative modification,
- Fig. 8C: shows a cross-section through a stator beam and a mover according to an embodiment of the invention,
- Fig. 8D: shows a detail of a cross-section through a stator beam and a mover according to an embodiment of the invention, and
- Fig. 9: illustrates schematically the drive control according to an embodiment of the invention.

It is emphasized that identical parts or parts with the same functionality are designated by the same reference numbers in all figures.

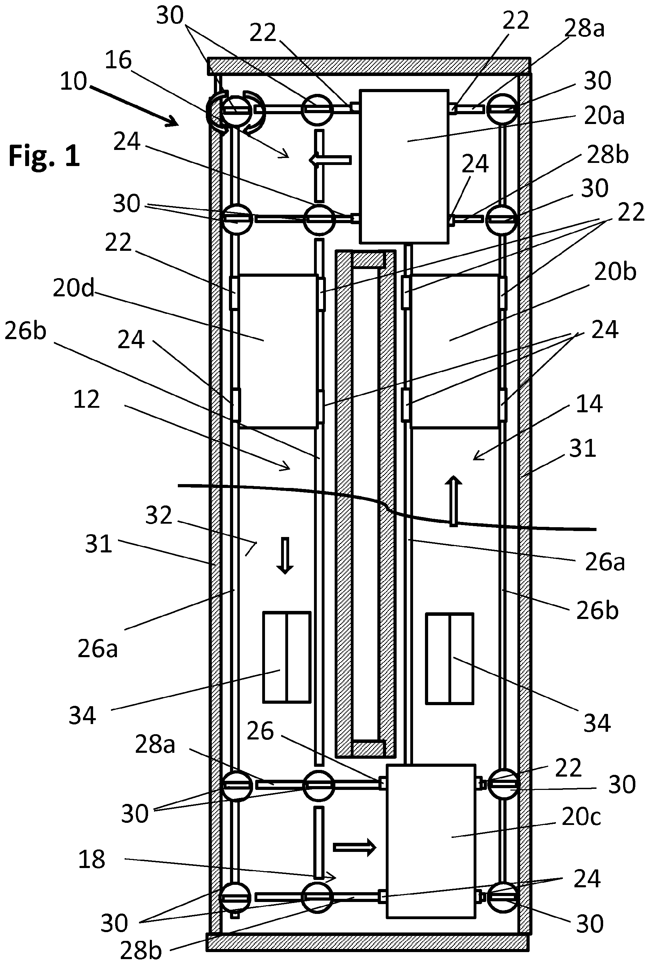

Fig. 1 shows an elevator 10 as an example of a passenger conveyor, having two vertical elevator shafts 12, 14 are at least at their upper and lower ends connected by horizontal shaft parts 16, 18 in which elevator cars 20a-20d are movable via linear motors. The linear motors are formed by upper movers 22 and lower movers 24 which are rotatably mounted, i.e. pivoted to the back side of the elevator cars, co-acting together with vertical stator beams 26a,b, horizontal stator beams 28a,b and with rotatable stator beam parts 30 which are rotatably mounted to a common back wall 32 of the vertical and horizontal shafts 12, 14, 16, 18. The vertical elevator shafts 12, 14 are usually located between shaft walls 31 of a building.

Via this arrangement of vertical stator beams 26a,b and horizontal stator beams 28a,b and the rotatable stator beam parts 30 located in between them, the elevator cars 20a-20d are able to move via their movers 22, 24 in the two elevator shafts 12, 14 and two horizontal elevator shaft parts 16, 18 in a trajectory path as indicated by the arrows. The advantage of such a solution is that no counterweights and no hoisting ropes are necessary which makes this basic concept very useful for high buildings as skyscrapers wherein the vertical length of the elevator shaft is more or less unlimited. A height limiting factor for conventional traction sheave elevators was the weight of the elevator ropes, which sum up in high shafts to a weight of tons. This restriction is not present in this linear motor based elevator concept.

With the reference number 34, landing doors are indicated which are preferably located in the common sidewall facing the viewer, i.e. opposite to the common back wall 32 where the stator beams 26a,b, 28a,b are mounted. But of course the landing doors could also be on the same back wall 32 or where the stator beams are mounted.

The cars 20a-d are in a circular motion within the two parallel elevator shafts 12, 14. To each car 20a-d the preferably four movers 22, 24 are installed, two per stator beam 26a,b, 28a,b. The linear motors will be disclosed in greater detail below. Thus there are 32 mover units per car and 32 inverters per car. All the inverters of the same car 20 are connected to common DC link, such that regenerative energy returning from one inverter back to DC link may be shared with / supplied to the other inverters. Each car 20 has a battery, which is connected to the common DC link.

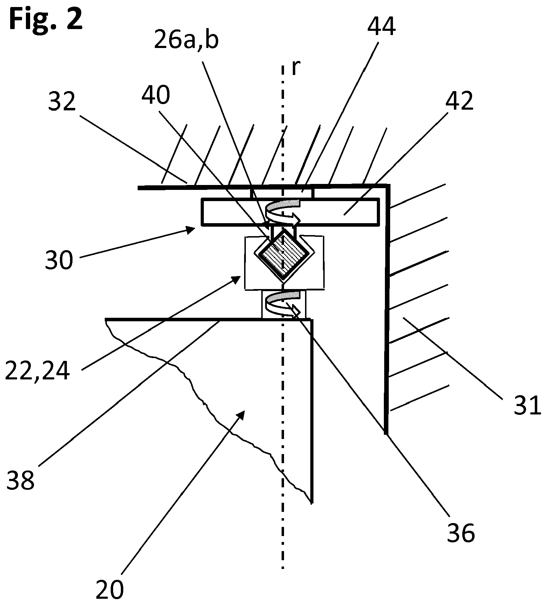

Fig. 2 shows the co-action of the rotatable stator parts 30 and the movers 22, 24 which are via a pivoted joint 36 rotatably mounted to a wall, particularly back wall or support structure 38 of the elevator car 20. The rotatable stator part 30 and the mover 22,24 are rotatable around a common rotation axis r. The rotatable rail part 30 comprises a rail section 40 which abuts in the vertical direction (as indicated) with the vertical stator beams 26a, 26b. The stator sections 40 are mounted to a rotating disc 42, which is optional, and a bearing 44 to the back wall 32 of the elevator shaft whereby preferably either the rotating disk 42 or the mover 22, 24 is driven with a rotation drive around the common rotation axis r. Thus, the whole arrangement of rotatable stator part and mover can be rotated with only one rotating drive. During the rotation, the linear motor is switched off so that the mover 22, 24 and the stator section 40 are via the magnetic force between the stator section and the mover 22, 24 fixedly attached to each other which keeps the car from moving during change of trajectory path. Accordingly, a brake for keeping the mover 22, 24 and the stator section 40 of the rotatable stator part 30 together is not necessary. Alternatively, an additional separate brake device may be introduced to keep the car standstill. This may be necessary in alternative embodiments where the magnetic force would not otherwise be adequate, for example, in embodiments wherein the stator poles are implemented with magnets, such as Halbach arrays, and the rotor coils of the mover are air core coils, i.e. the rotor is implemented without ferromagnetic core. After the whole arrangement has turned into the horizontal direction, the stator section 40 is now in line with the horizontal stator beams 28a, 28b and the mover 22, 24 can again be energized as to convey the elevator car 20a-d along the horizontal elevator shaft parts 16, 18.

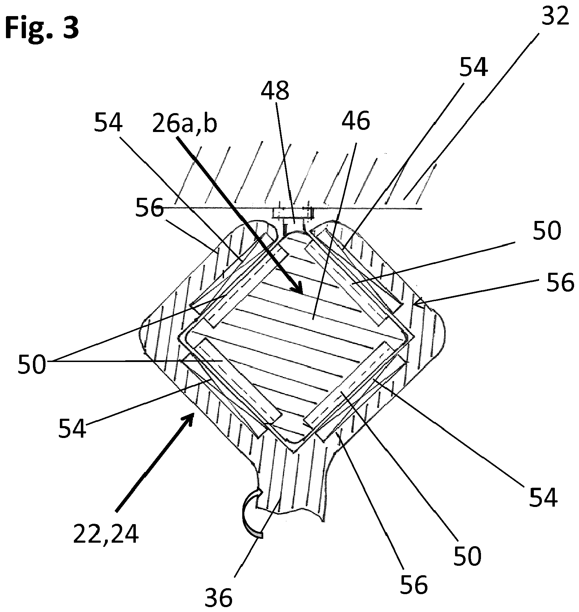

Fig. 3 shows a horizontal cross-section of the vertical stator beam 26a,b and the mover 22, 24. Accordingly, the vertical stator beam 26a,b comprises a stator beam base part 46 with square cross section having on its sides four stator rods 50 comprising stator teeth 8. The mover 22, 24 comprises active parts 54 located in a C-shaped mover housing 56 surrounding the stator beam base part 46, which active parts 54 face the corresponding stator rods 50 of the stator beam base part 46 as to generate an upwards directed propulsion force which is able to drive the elevator car 20a-d against the gravity force in upwards and downwards direction. The mover housing 56 together with the active mover parts 54 form the movers 22, 24 of the linear motors of the elevator. The mover housing 56 is via the pivot joint 36 mounted to a support structure 38 of the car 20. The stator beam base part 46 is supported with mountings 48 to the back wall 32 of the elevator shaft 12, 14, 16, 18. The physical properties of the four different stator rods 50 of the vertical stator beam 26a,b and the physical properties of the corresponding active mover parts 54 of the mover 22, 24 are identical.

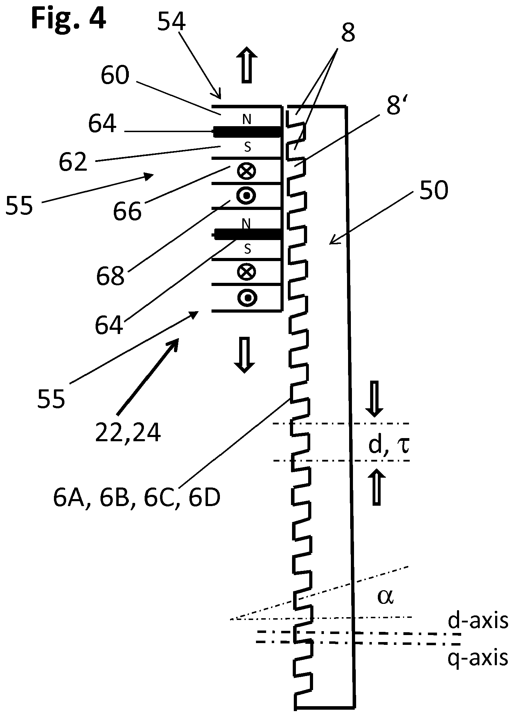

Preferably, in this arrangement, the stator teeth 8 are inclined downwards by an angle α as it is shown in Fig. 4. The tooth pitch between the stator teeth 8 is d in case of all stator rods 50. Between the stator teeth 8 of the stator rods 50, gaps 8' are provided which are also identical on all four stator rods 50 of the vertical stator beam 26a,b. The active mover parts 54 form together with the stator beams 26, 28 an FSPM motor. The active mover parts 54 each comprise successive packages, hereinafter mover units 55 with two mover irons 60, 62 between which one thin permanent magnet 64 is located. This arrangement of mover irons 60, 62 and permanent magnet 64 is followed by a winding 66, 68 which are controlled as to produce a magnetic field in opposite direction. This package comprising the succession 60, 62, 64, 68 of mover irons, permanent magnets and windings is successively repeated along to the length of the mover 22, 24, each such package forming a mover unit. By this way, a very effective linear motor is formed which allows a good control of the car movement. Via the downwards inclination of the stator teeth 8 by the angle α, the pulling effect of the linear motor in upwards direction is increased so that this vertical stator beam is particularly adapted to compensate the gravitational force of the elevator car in downwards direction.

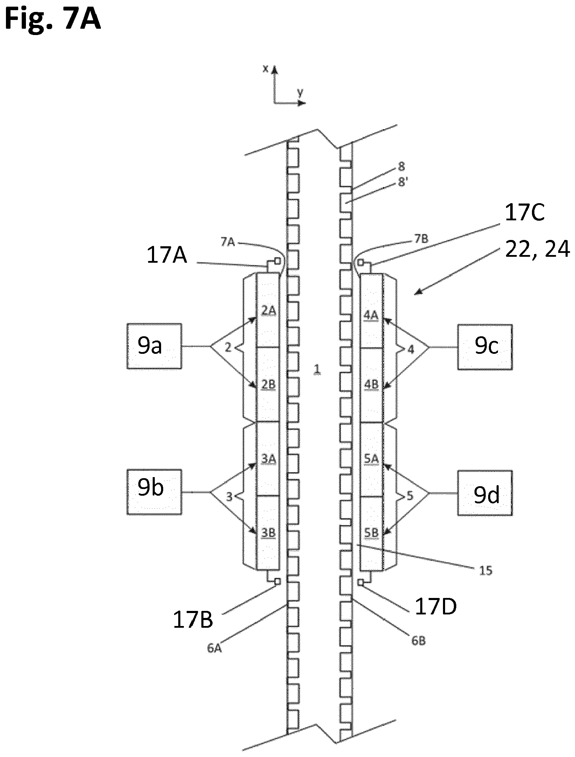

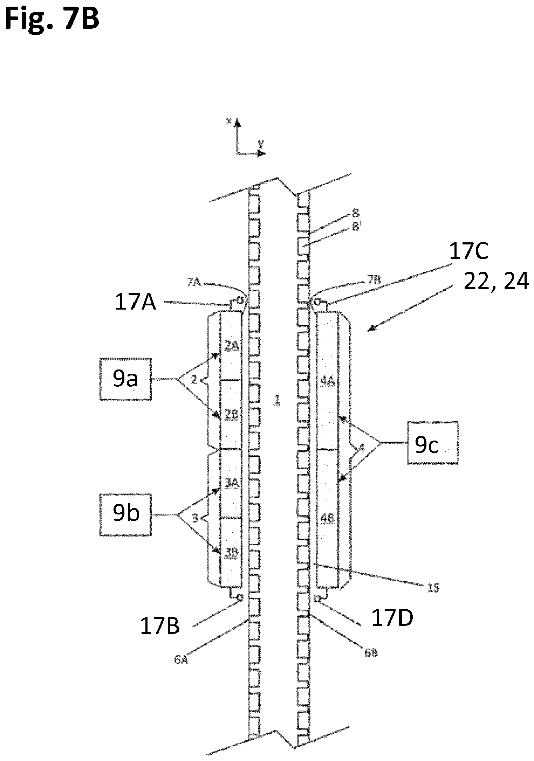

This motor of Fig. 4 is a flux-switching permanent magnet motor. All the permanent magnets 64 and three-phase motor windings are in the mover units 55 (2, 3, 4, 5 in Fig. 7A,B). In the embodiment of Fig. 4, the ferromagnetic poles 8 are teeth provided in preferably iron stator rods 50 which are embedded on all four side faces 6A, 6B; 6C, 6D of a ferromagnetic stator beam base part 46 forming together the stator beam 1; 26, 28.

The stator side of the motor is very simple, as the side-faces 6A, 6B; 6C, 6D of the stator beam 26, 28 carrying ferromagnetic poles 8 do not have any permanent magnets as well as no windings either. This simplicity is cumulative when the stator beam 1 becomes long to extend the moving range of the mover 24, 26 to several tens, if not hundred meters. When the mover 22, 24 travels along the stator beam 1, there is an air gap 15 between the side faces 6A, 6B, 6C, 6D and the counter-faces 7A, 7B, 7C, 7D. This air gap 15 is maintained in a non- contact manner with levitation. The windings 66, 68 and permanent magnets 64 of the mover units 55 are arranged to co-act with the ferromagnetic poles 8 of the respective side faces 6A, 6B; 6C, 6D of the stator beam 1; 26,28 to generate force components needed to levitate and drive the mover 22, 24 along the trajectory defined by the stator beam 1; 26, 28

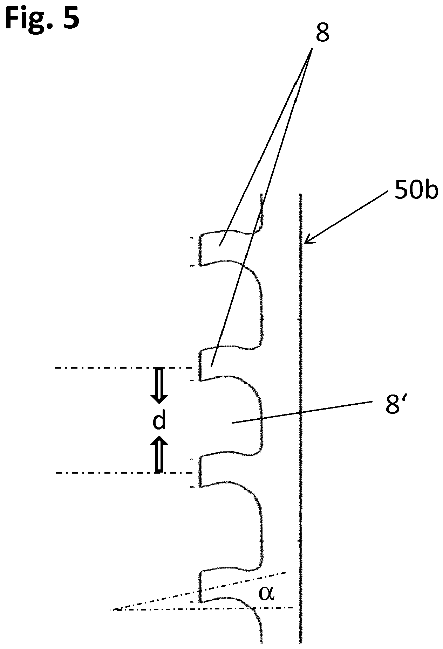

Fig. 5 shows a second embodiment of a stator beam wherein the stator rod 50b comprises stator teeth 8 which are directed downwards by an angle α but additionally to Fig. 4 the centre line of the teeth 8 is curved. Also this stator beam leads to an increased pulling force of the linear motor in upwards direction thus being able to compensate for the force impact on the mover caused by the gravitational force of the elevator car and its load.

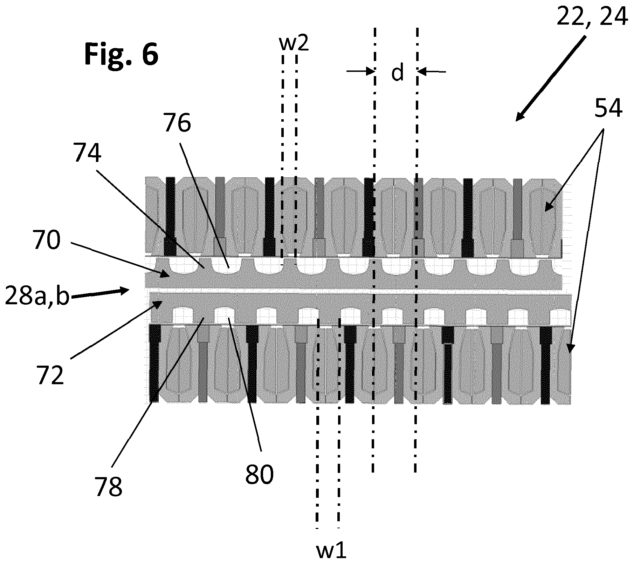

Fig. 6 shows in a vertical cross-section the two active mover parts 54 of a mover 22, 24 facing a horizontal stator beam 28a,b which consists of a separate upper stator beam part 70 and lower stator beam part 72 which are connected to each other, e.g. by welding or gluing or via bolts or similar connection methods. The upper stator beam part 70 comprises upper stator teeth 74 extending upwards which are separated by upper gaps 76 located between the upper stator teeth 74. The surface of the upper gaps 76 between the upper stator teeth 74 is smooth, i.e. differentiable as to reduce the harmonics during operation of the linear motor. The lower stator beam part 72 comprises lower stator teeth 78 extending downwards which are separated by lower air gaps 80. The pitch d of the upper stator teeth 74 is of course the same as the pitch of the lower stator teeth 78 and the same pitch as that of the vertical stator beams 26a,b. All stator teeth 74, 78 of the horizontal stator beam 28a,b extend normal to the stator beam 28a,b. Anyway, the lower stator teeth 78 have a larger width w1 than the upper stator teeth 74 which have a smaller width w2. Also the ratio between the tooth width and gap width is for the upper stator beam part 70 smaller than for the lower stator beam part 72. Thus, by this difference of the geometrical configuration of the upper and lower stator beam parts 70, 72 the attraction between the mover 22, 24 and the lower stator beam part 72 is essentially larger than the attraction between the upper active mover parts 54 and the upper stator beam part 70, thus compensating for the gravitational force of the loaded car acting on the mover 22, 24. Thus, the invention provides individualized vertical and horizontal stator beams 26a,b, 28a,b which consider the fact that the gravitational force acting on the car 20 and its load is acting parallel to the vertical stator beams while it is acting normally to the horizontal stator beams.

In an embodiment, the first stator beam extends in an inclined direction in an inclined movement path and the second stator beam extends in a vertical direction in a vertical movement path. In this case, stator teeth of the first, inclined stator beam may be designed to deal with the normal force component caused by gravity. For example, free ends of the stator teeth of the first stator beam may be less downwards-inclined that free ends of the stator teeth of the second stator beam (i.e. stator teeth of the first stator beam may be more straight than stator teeth of the second stator beam).

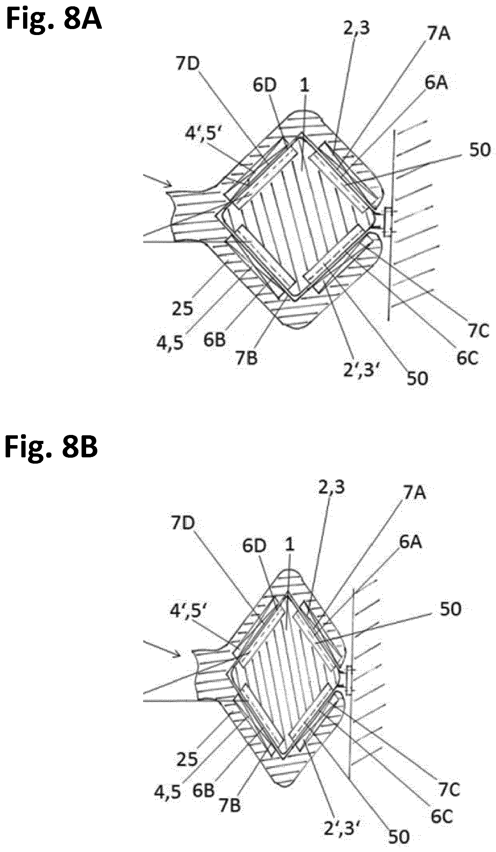

Figure 7A shows a side view of an electric linear motor. To facilitate understanding of the matter, only two opposite side faces 6A, 6B and respective counter-faces 7A, 7B of the motor are illustrated. The linear motor comprises a longitudinal stator beam 1 and a mover 22, 24, which surrounds the stator beam 26a,b, 28a,b. The stator beam 1 has four side faces 6A, 6B, 6C, 6D as illustrated in Fig. 8A and Fig. 8B. The side faces are located two by two at opposite sides of the stator beam 1 such that the four side faces 6A, 6B; 6C, 6D substantially cover circumference of the stator beam 1. Each of the side faces carries ferromagnetic poles 8, i.e. ferromagnetic teeth, spaced apart by a pitch 8', e.g. a gap or slot between the teeth 8. The mover 22, 24 comprises four counter-faces 7A, 7B; 7C, 7D facing the respective side faces 6A, 6B; 6C, 6D of the stator beam 1.

The mover has in each of said counter-faces 7A, 7B; 7C, 7D mover units 2,3,4,5; 2',3',4',5'. The motor may be a flux-switching permanent magnet motor as shown in Fig. 4. All the permanent magnets and three-phase motor windings are in the mover units 2, 3, 4, 5. In the embodiment of Fig. 7B, the ferromagnetic poles 8 are teeth provided on a side face 6A, 6B; 6C, 6D of a ferromagnetic stator rod 50, which stator rod 50 is embedded into respective side-face of the stator beam.

The stator side of the motor is very simple, as the side-faces 6A, 6B; 6C, 6D of the stator beam carrying ferromagnetic poles 8 do not have any permanent magnets as well as no windings either.

This simplicity is cumulative when the stator beam 1 becomes long to extend moving range of the mover 22, 24. When mover 22, 24 travels along the stator beam 1, there is an air gap 15 between the side faces 6A, 6B, 6C, 6D and the counter-faces 7A, 7B, 7C, 7D. This air gap 15 is maintained in a noncontact manner with levitation. The windings 66, 68 and permanent magnets 64 of the mover units are arranged to co-act with the ferromagnetic poles 8 of the respective side faces 6A, 6B; 6C, 6D of the stator beam 1; 26a,b, 28a,b to generate force components needed to levitate and drive the mover 22, 24 along the trajectory defined by the stator beam 1; 26a,b, 28a,b.

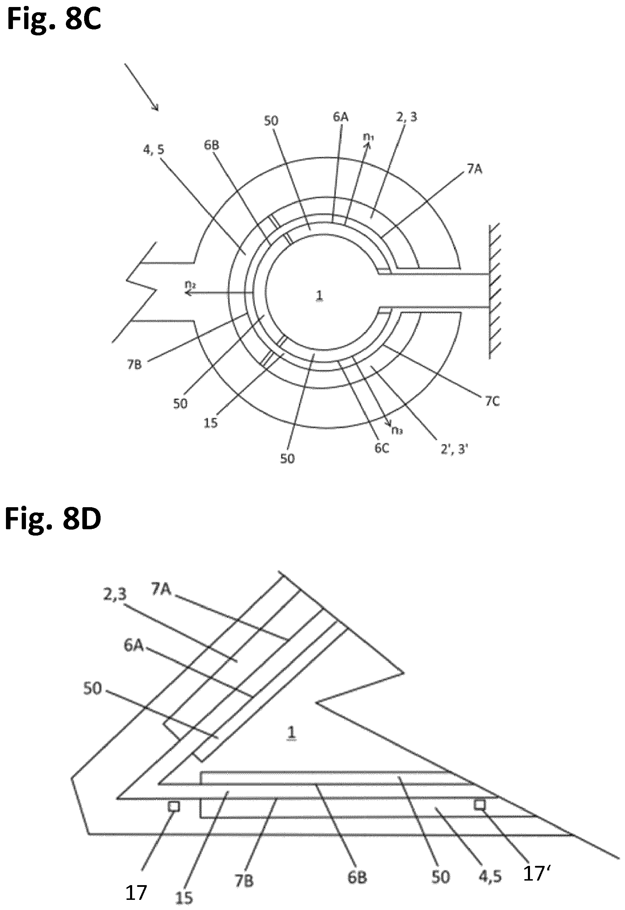

The expression "at least two side faces 6A, 6B, 6C, 6D located at opposite sides of the stator beam 1" means that surface normals of said at least two side faces (n1, n2,n3, see fig. 8C) both have a vector component such that said vector components are in opposite directions. Therefore, when attraction force is generated between said mover units 2, 3, 4, 5 and the respective side faces 6A, 6B; 6C, 6D, the generated attraction forces have vector components in opposite directions relative to each other to enable adjustment of air gap length parallel to y-direction of fig. 7A and 7B and therefore levitation of the mover.

Further, in some embodiments it may be necessary to control turning of the mover 22, 24 around the longitudinal axis (parallel to direction x of fig. 7) of the stator beam. To enable this, stator and mover may be designed such that rotating torque is generated around the stator beam 1. Thus, as illustrated in Fig. 8D, at least some of the opposite side faces 6A, 6B may be inclined respective to each other, that is, angled from parallel direction around the longitudinal axis of the stator beam. Of course the respective counter faces 7A, 7B of the mover have to be inclined in the same manner to face the side faces 6A, 6B. As illustrated in Fig. 8C, at least some of the side faces 6A, 6B, 6C and the respective counter faces 7A, 7B, 7C may be curved. As illustrated in modification of Fig. 8B, the side faces 6A, 6B, 6C, 6D (and the respective counter faces 7A, 7B, 7C, 7D) may form a parallelogram. Also this modification may enable generation of rotating torque around the stator beam 1.

The mover frame 25 may be made of any suitable rigid, preferably light-weight material, such as glass-fiber composite, carbon fiber composite or aluminum. As fig. 7 shows, the mover 22, 24 has in each counter-face 7A, 7B two mover units 2, 3; 4, 5 arranged consecutively in the travelling direction, which is parallel to direction x in fig. 7. Two consecutive, mover units are needed to straighten tilt of air gap 15.

Each mover unit is supplied with its own inverter 9a, 9b, 9c, 9d. In an alternative embodiment the mover 22, 24 has in each counter-face 7A, 7B three mover units arranged consecutively in the travelling direction, and each mover unit is supplied with its own inverter. In some other embodiments there may be even more than three mover units per counter-face / inverters for supplying the same.

Still in another embodiment, as illustrated in Fig. 7B, the mover 22, 24 has in one counter-face 7A two mover units 2, 3 arranged consecutively in the travelling direction, whereas the other counter-face 7B at opposite side of the stator beam 26a,b, 28a,b has only one, longer mover unit 4. Each mover unit 2, 3, 4 has an inverter 9a, 9b, 9c. Also this kind of solution may be adequate to straighten tilt of air gap 15 with control of the mover units. Further, to achieve uniform force distribution, each mover unit has two (or even more than two) commonly controlled rotors 2A, 2B; 3A, 3B; 4A, 4B; 5A, 5B with windings. To achieve common control, windings of the different rotors of same mover unit are connected in series or in parallel to be supplied with the same inverter 9a, 9b, 9c, 9d.

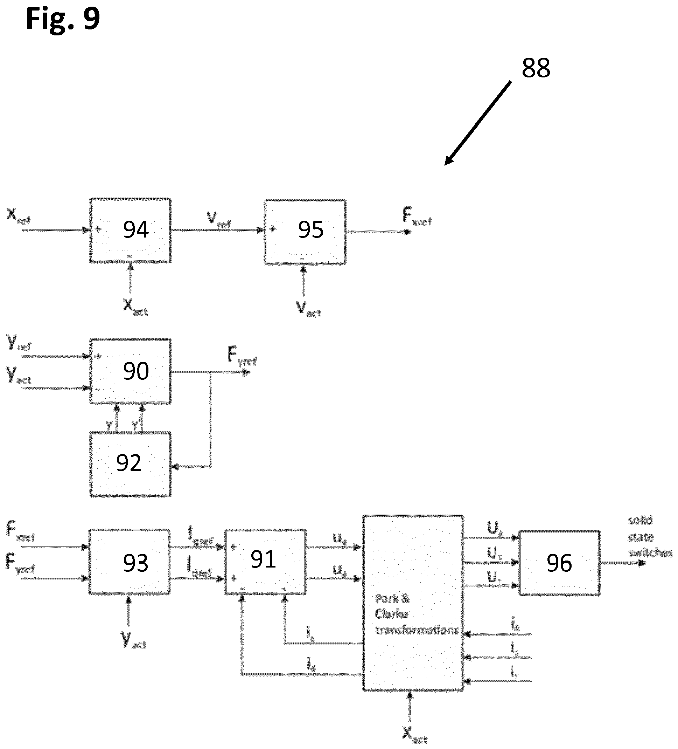

Figure 9 depicts a drive control 88 with an architecture used to control levitation and travel of the linear motor of Fig. 7. The architecture of the drive control 88 shows control elements which are implemented in the control software of the processing units of each inverter 9a, 9b, 9c, 9d belonging to the motor drive.

According to Fig. 9, each inverter 9a, 9b, 9c, 9d receives position information X_{act} of the mutual position of the three-phase windings of the mover unit controlled with corresponding inverter, and the ferromagnetic poles facing / co-acting with said three-phase windings. The mutual position X_{act} is measured in the travelling direction, parallel to direction x in Fig. 7, by means of one or more position sensors 17A, 17B, 17C, 17D, which may be e.g. hall sensors or inductive proximity sensors. Each inverter 9a, 9b, 9c, 9d controls current supply of the rotor windings in a d, q - coordinate system of its own. The d, q - coordinate system is synchronized by means of the position information X_{act} to the position of ferromagnetic poles of the stator beam facing the rotor windings. The d-axis is referenced to the direction of the ferromagnetic poles 8 such that it is in the direction of the center line of the co-acting ferromagnetic pole. This direction may be the same as center line of the stator teeth (see fig. 4); on the other hand it may also differ from that, e.g. due to saturation of the stator teeth. d-axis direction may also be defined otherwise: for example, to be in position wherein flux linkage of R-phase of the mover unit has its maximum.

Each inverter 9a, 9b, 9c, 9d receives also information of length of air gap (Y_{act}) between side-face 6A, 6B carrying the ferromagnetic poles 8 and the counter-face 7A, 7B containing the mover unit 2, 3, 4, 5. Air gap length information (Y_{act}) may be received from sensors 17A, 17B, 17C, 17D or, additionally or alternatively, from separate air gap sensors, such as eddy current sensors, which may be disposed at same locations as sensors 17A, 17B, 17C, 17D or which may replace one or more of the sensors 17A, 17B, 17C, 17D. To measure air gap length as well as air gap tilt in longitudinal direction of stator beam 26a,b, 28a,b, at least two sensors are needed for example at opposite ends at opposite sides of the mover, for example at sensor positions 17A and 17D of Fig. 7.

Further, to measure turning of the mover 22, 24 around the longitudinal axis of the stator beam, two parallel position sensors 17, 17' may be disposed in transverse direction of air gap 15, as illustrated in Fig. 8D. A reference value for the air gap Y_{ref} is memorized in the processing unit of the inverter 9a, 9b, 9c, 9d. Air gap controller 90 calculates a difference between the air gap reference value Y_{ref} and the air gap length information Y_{act} and generates a reference value for the attraction force F_{yref}, e.g. the force component parallel to the y-direction of Fig. 7, to adjust the length of air gap Y_{act} towards the reference value Y_{ref}. The air gap controller 90 is a state controller which uses an observer 92 to obtain simulated position y and velocity y' (in the y-axis direction of Fig. 7) of the mover 22, 24 mass under the effect of the attraction force estimate F_{yref}.

In a first embodiment the air gap controllers 90 of inverters control mover units 55; 2, 3, 4, 5 at both opposite sides of the stator beam so as to adjust the air gap size. In a second alternative embodiment, on one side of the stator beam the reference value for the attraction force F_{yref}, is kept constant and air gap controller is used only in connection with mover units of the other side of the stator beam to adjust attraction force reference value F_{yref}. This means the one or more mover units of one side provide a constant attraction force against which the air gap controllers act at the other side of the stator beam. In both alternatives the attraction can be easily adjusted as to consider a gravitational force acting on the mover(s). In a further alternative, no inverter / motor windings are used to generate a constant attraction force F_{yref}, Instead, at one side of the stator beam the mover units of the counter face are replaced with permanent magnets only, which permanent magnets generate an attraction force towards the side face of the stator beam. On the other side of the stator beam mover units with windings are controlled with air gap controllers of the inverters to act against the attraction force of said permanent magnets. With this solution no motor windings / inverters are needed for those counter faces with permanent magnets only.

Further, at least one of the inverters 9a, 9b, 9c, 9d of a common mover 22,24 receives travel position information x_{act} and travel speed information v_{act} of the mover. In this connection travel position information x_{act} and travel speed information refers to position / speed information of the mover in the direction parallel to the x-axis direction of fig. 7. In the current embodiment the same position information x_{act} is used to define mutual position between mover unit and respective ferromagnetic poles to synchronize d, q -axis of the drive unit / inverter to said ferromagnetic poles 8. This information is also used to control position x_{act} / speed v_{act} of the mover along the stator beam 1; 26a,b, 28a,b. In this embodiment the travel position information x_{act} is be received from the one or more sensors 17A, 17B, 17C, 17D but alternatively a separate sensor may be used. The travel speed information v_{act} may be received from a separate speed sensor, such as an encoder or tachometer, or it may be obtained from timely variation of the travel position information x_{act} (e.g. time derivative of the travel position information) which is the case in this embodiment. One of the inverters of a common mover acts as a master which performs position / speed control in the travelling direction of the mover and outputs a propulsion force reference value F_{xref} (i.e. reference force component parallel to the x-axis direction of fig. 7) to the other inverters 9a, 9b, 9c, 9d. Other inverters of the common mover then act as slaves, which do not perform position / speed control but propulsion force control only. If two or more movers are coupled to a common load-receiving means, such as to a common elevator car, it is also possible that only one inverter of only one mover acts as a master and all the other inverters / movers act as slaves to avoid interference of position / speed controllers.

Going back to Fig. 9, processing unit of the master inverter 9a, 9b, 9c, 9d calculates travel position reference value x_{ref} to establish an intended motion profile for the controlled mover(s). Position controller 94 calculates travel speed reference value v_{ref} from the difference between travel position reference x_{ref} and travel position of the mover x_{act} in the travelling direction x of the mover. Speed controller 95 calculates a propulsion force reference value F_{xref} from the difference between the travel speed reference v_{ref} and the travel speed information v_{act}. Propulsion force reference value F_{xref}, attraction force reference value F_{yref} and air gap length information Y_{act} are inputted into magnetic model 93, which calculates d-axis and q-axis current reference components I_{dref}, I_{qref} for the rotor windings. In case of slave inverters, each slave inverter calculates its own attraction force reference value F_{yref} by means of the air gap length information Y_{act}, but receives propulsion force reference value F_{xref} from the master inverter. With these reference values as well as the air gap length information from air gap sensor 17A, 17B slave inverter calculates the d-axis and q-axis current component reference values with the magnetic model 93.

The air gap controller 90, the position controller 94 and / or the speed controller 95 may be PI - controllers.

The drive control has an input for position data for the actual position of the mover on the first or second stator beam and thus adjusts the control parameters for the mover units 55, 2,3,4,5 accordingly as to provide a constant air gap irrespective of the orientation of the stator beam.

The magnetic model may consist of algorithms, which represent how attraction force and propulsion force of the motor depend on d-axis and q-axis currents as well as air gap length. This representation may be based on the following motor equations: ${i}_{d} = \left({a}_{d 0}-{b}_{dm}y\right) \left({ψ}_{d}-{ψ}_{r}\right) + \left({b}_{d}y+{a}_{dd}{\left|{ψ}_{d}\right|}^{S}+\frac{{a}_{dq}}{V + 2}{\left|{ψ}_{d}\right|}^{U}{\left|{ψ}_{q}\right|}^{V + 2}\right) {ψ}_{o} |$ ${i}_{q} = \left({a}_{qo}+{b}_{q}y+{a}_{qq}{\left|{ψ}_{q}\right|}^{T}+\frac{{a}_{dq}}{U + 2}{\left|{ψ}_{q}\right|}^{U + 2}{\left|{ψ}_{q}\right|}^{V}\right) {ψ}_{q}$ ${F}_{x} = \frac{3 π}{τ} \left({ψ}_{d}{i}_{q}-{ψ}_{d}{i}_{d}\right)$ ${F}_{y} = - \frac{3}{2} \left[{b}_{d}{{ψ}_{d}}^{2}+{b}_{q}{{ψ}_{q}}^{2}-{b}_{dm}{\left({ψ}_{d}-{ψ}_{r}\right)}^{2}\right] - \frac{{f}_{σ}}{{\left(1+{c}_{σ}y\right)}^{2}}$ wherein i_{d} and i_{q} represent current components in d, q coordinate system, a_{d0}, a_{dd}, a_{dq}, a_{q0}, a_{qq}, a_{dq}, b_{dm}, b_{d}, b_{q}, c_{σ}, f_{σ}, ψᵣ, S, T, U, V are motor -specific constants. They are derived based on reluctances, which depend on motor geometry. ψ_{d} and ψ_{q} are d and q -axis components of the motor flux linkage, τ is pole pitch of the motor (2π), y is air gap length between rotor and stator, and Fₓ is propulsion force reference value and F_{y} is attraction force reference value.
In view of the above equations, Fₓ may be represented to be dependent only on magnetic flux linkage and air gap length y: ${F}_{x} \left({ψ}_{d}, {ψ}_{q}, y\right)$ also F_{y} may be represented to be dependent only on magnetic flux linkage and air gap length y: ${F}_{y} \left({ψ}_{d}, {ψ}_{q}, y\right)$

Thus magnetic flux linkage components ψ_{d} and ψ_{q} may be solved by means of the representations (3) and (4) when the (reference) values of propulsion force F_{xref} and attraction force F_{yref} are received from the speed controller 95 and the air gap controller 90. Reference current values I_{dref}, I_{qref} may then be calculated with the equations (1) and (2) by means of the magnetic flux linkage components ψ_{d} and ψ_{q}.

Alternatively or additionally, the magnetic model 93 may comprise a table, having d- axis and q-axis current components memorized and indexed by means of propulsion force reference values F_{xref}, attraction force reference values F_{yref}, and air gap length information Y_{act}. To get more accurate values for the d, q -axis current reference components, it is possible to use interpolation between the memorized values of the table. Table values may also be determined with simulation, for example by using Finite Element Method (FEM).

One or more of the motor-specific constants a_{d0}, a_{dd}, a_{dq}, a_{q0}, a_{qq}, a_{dq}, b_{dm}, b_{d}, b_{q}, c_{σ}, f_{σ}, ψᵣ, S, T, U, V in the equations (1) - (4) may be different dependent of the location of the mover on vertical 26a,b or horizontal 28a,b stator beam. This way it may be possible to take into account different stator teeth geometry of horizontal and vertical stator beams. Further, one or more of the PI controllers 90, 94, 95 may have different gain dependent of the location of the mover on vertical 26a,b or horizontal 28a,b stator beam, because gravitation affects differently on the mover / elevator car dependent of the location.

In the magnetic model 93 at least one of d-axis current reference component I_{dref} and q -axis current reference component I_{qref} of the motor windings is changed when a change in at least one of the propulsion force reference value F_{xref}, attraction force reference value F_{yref} and air gap length information Y_{act} of the mover unit 2, 3, 4, 5 takes place. Therefore magnetic model 93 may speed up adaptation of the mover units and thus the mover to variable operation conditions, making operation of the mover 22, 24 more stable and responsive.

d-axis and q-axis current component reference values I_{dref}, I_{qref} are communicated to current controller 91, which calculates d-axis and q-axis voltage references U_{d}, U_{q} for the windings of the mover unit based on the difference between d- and q- axis current reference values I_{dref}, I_{qref} and measured d-axis and q-axis current components I_{d}, I_{q}.

Transformation from d, q coordination system to three phase voltage components U_{R}, U_{S}, U_{T}, as well as transformation from three-phase current measurements i_{R}, i_{S}, i_{T} to d, q -axis component values I_{d} , I_{q} takes place with Park and Clarke transformations, which transformations as such are known in the art. For the synchronization of the d, q coordinate system travel position information X_{act} is used as disclosed above.

The three-phase voltage components of the mover unit U_{R}, U_{S}, U_{T} are communicated to state vector PWM modulator 96 (pulse width modulator) of the inverter, which creates the control pulses for controlling the solid state switches of the inverter power stage to introduce modulated three-phase voltage components to the windings of the mover unit. These solid state switches may be, for example, igbt-transistors, mosfet -transistors, silicon carbide transistors and / or gallium nitride transistors.

In an alternative embodiment to that shown in Fig. 9, an adequate performance level may be achieved with a simplified control architecture, wherein the speed controller 95 of the master inverter outputs directly q- axis current reference components I_{qref} to the slave inverters. Each slave inverter generates d -axis current reference component I_{dref} of its own, by means of the air gap controller 90. These d, q -current reference components I_{dref}, I_{qref} are then directly communicated to current controller 91, thus avoiding use of magnetic model 93, i.e. bypassing it. This may reduce processing power needed for levitation / speed control of the mover 22, 24.

Instead of one inverter 9a, 9b, 9c, 9d acting as a master, it is possible to use a separate master control unit which may perform function of at least one of air gap controller 90, position controller 94 and speed controller 95 for one or more of the inverters 9a, 9b, 9c, 9d and output the required reference values to the inverters 9a, 9b, 9c, 9d to control current supply to the mover units.

The invention can be carried out within the scope of the appended patent claims. Thus, the above-mentioned embodiments should not be understood as delimiting the invention.

### List of reference numbers:

- 1: stator beam
- 2: mover unit
- 3: mover unit
- 4: mover unit
- 5: mover unit
- 6: side faces of the stator beam, provided in the stator rods
- 7: counter faces of the mover
- 8: stator poles
- 9: inverter
- 10: elevator - passenger conveyor
- 12: first (vertical) elevator shaft
- 14: second (vertical) elevator shaft
- 15: air gap
- 16: upper horizontal shaft part
- 17: position sensors at air gaps
- 18: lower horizontal shaft part
- 20: elevator car
- 22: upper car movers
- 24: lower car movers
- 25: mover frame
- 26: vertical stator beams
- 28: horizontal stator beams
- 30: rotatable stator beam parts between the horizontal and vertical stator beams
- 31: elevator shaft walls
- 32: common back wall of all elevator shafts carrying the stator beams
- 34: landing doors
- 36: pivoted joint between the car and the mover
- 38: (back) wall or support structure of the elevator car for mounting the pivoted joint
- 40: stator section fixed to rotating disc of rotatable stator beam part
- 42: rotating disc
- 44: bearing for the rotating disc on the back wall of the elevator shaft
- 46: stator beam base part with square horizontal cross section having on its four side faces a stator face each
- 48: mountings for the stator beam to the back wall of the elevator shaft
- 50: stator rods at side the four faces of the stator beam containing stator poles/teeth
- 54: active mover parts of the mover facing the stator faces of the stator beam
- 55: axially successive mover units in a mover
- 56: mover housing carrying the active mover parts surrounding the stator beam
- 60: first mover iron of a package of the mover
- 62: second mover iron of a package of the mover
- 64: permanent magnet between the mover iron
- 66: first winding of a package of the mover
- 68: second winding of a package of the mover
- 70: upper stator beam part
- 72: lower stator beam part
- 74: upper stator teeth
- 76: upper gaps
- 78: lower stator teeth
- 80: lower gaps
- 88: drive control
- 90: air gap controller
- 91: current controller
- 92: observer
- 93: magnetic model
- 94: position controller
- 95: speed controller
- 96: PWM modulator
- r: common rotation axis of rotatable stator part and mover
- d,τ: pitch of the stator teeth
- α: angle of downwards inclination of the teeth of the vertical stator beams vs the horizontal plane
- w1: width of the lower teeth of the horizontal stator beam
- w2: width of the upper teeth of the horizontal stator beam

## Claims

1. Conveyor (10) for passengers and/or goods, the conveyor (10) comprising at least one linear electric motor formed by linear stator beams (1; 26a,b, 28a,b) with stator poles (8; 74, 78) being located in a fixed correlation to an environment, and at least one mover (22, 24) co-acting and moving along the stator beams (1; 26a,b, 28a,b), the stator beams comprising at least a first stator beam (28a,b) extending in a first movement path in a first direction of the passenger conveyor (10) and at least a second stator beam (26a,b) extending in a second movement path in a second direction of the passenger conveyor (10), wherein the first direction and the second direction are different directions, selected from the group of horizontal, inclined and vertical direction, and which mover is adapted to face the respective stator poles of the stator beam, wherein the mover (22, 24) has at least one winding (66,68) arranged to co-act with the stator poles (8); the linear motor being controlled by a motor drive, which is controlled by a drive control (88), whereby the drive control comprises a set of control parameters, and whereby the drive control is configured to use at least partly different set of control parameters when associated with the first stator beam (26a,b) than with the second stator beam (28a,b), and which drive control is further connected with an input for the position of the mover (22,24), and that the drive control is configured to select the control signals for the mover dependent on the location of the mover on either the first or second stator beam.

2. Conveyor according to claim 1, **characterized in that** the drive control comprises a control model, particularly a magnetic model (93).

3. Conveyor according to claim 2 , **characterized in that** whereby the drive control (88) and motor drive are configured to provide control signals for the mover by means of the control model

4. Conveyor according to one of the preceding claims, **characterized in that** the stator beam (1; 26, 28) comprises at least two side faces (6A, 6B; 6C, 6D) located at opposite sides of the stator beam (1; 26, 28), each of the side faces (6A, 6B; 6C, 6D) carrying a corresponding stator beam with ferromagnetic poles (8) spaced apart by a pitch (8'),
and which mover comprises at least two opposite counter-faces (54; 7A, 7B; 7C, 7D) facing the respective stator beams on the opposite side faces (6A, 6B; 6C, 6D) of the stator beam (1; 26, 28).

5. Conveyor according to claim 4, **characterized in that** each of the counter-faces (54; 7A, 7B; 7C, 7D) of the mover has at least one mover unit (2, 3, 4, 5) with at least one winding (66, 68) and at least one permanent magnet (64), which are arranged to co-act with the ferromagnetic poles (8) of the stator beams on the respective side face (6A, 6B; 6C, 6D) of the stator beam (1).

6. Conveyor according to claim 4 or 5, **characterized in that** the drive control (88) and motor drive are configured to provide different control signals/parameters for the opposite mover counter-faces (54; 7A, 7B; 7C, 7D), which drive control is further connected with an input for the position of the elevator car, and that the drive control is configured to select the difference between the control signals/parameters for the two opposite counter faces dependent on the location of the elevator car on either the first or second stator beam.

7. Conveyor according to one of claims 1 - 3, **characterized in that** the stator poles (8) of the stator beams (1; 26, 28) are in the form of permanent magnets, such as Halbach arrays, and that the at least one winding (66, 68) of the mover (22, 24) is an air-core winding.

8. Conveyor according to any of the preceding claims, whereby width and/or height and / or length (d) and / or material of the stator poles (74) of the first stator beam is different from the width and/or height and / or length (d) and / or material of the second stator beam.

9. Conveyor according to any of the preceding claims, **characterized in that** the conveyor is an elevator (10).

10. Conveyor according to one of the preceding claims, **characterized in that** the first direction is horizontal direction.

11. Conveyor according to one of the preceding claims, **characterized in that** the second direction is vertical direction.

12. Conveyor according to one of the preceding claims, **characterized in that** the first stator beam is horizontal stator beam and that the second stator beam is vertical stator beam.

13. Method of operating a conveyor (10) for passengers and/or goods, the conveyor (10) comprising at least one linear electric motor formed by linear stator beams (26a,b, 28a,b) with stator poles (8; 74, 78) being located in a fixed correlation to an environment, and at least one mover (22, 24) co-acting and moving along the stator beams (26a,b, 28a,b), the stator beams comprising at least a first stator beam (28a,b) extending in a first movement path in a first direction of the passenger conveyor (10) and at least a second stator beam (28a,b) extending in a second movement path in a second direction of the passenger conveyor (10), wherein the first direction and the second direction are different directions, selected from the group of horizontal, inclined and vertical direction, and which mover is adapted to face the respective stator poles of the stator beam (1; 26a,b, 28a,b), wherein the mover has at least one winding arranged to co-act with the stator poles; the linear motor being controlled by a motor drive which motor drive is controlled by a drive control, whereby the drive control comprises a set of control parameters, **characterized in that** for the first and second stator beam different control parameters are used for the drive control.

14. Method according to claim 12, wherein the stator beam comprises at least two side faces (6A, 6B; 6C, 6D) located at opposite sides of the stator beam (1; 26a,b, 28a,b), each of the side faces (6A, 6B; 6C, 6D) carrying a corresponding stator beam with ferromagnetic poles (8) spaced apart by a pitch (8'),
and which mover comprises at least two opposite counter-faces (54; 7A, 7B; 7C, 7D) facing the respective stator beams on the opposite side faces (6A, 6B; 6C, 6D) of the stator beam (1; 26a,b, 28a,b), whereby the drive control is further connected with an input for the position of the elevator car
**characterized in that** different control signals/parameters are used for the opposite counter-faces, , and that the difference between the control signals/parameters of the two opposite counter faces depend on the location of the elevator car on either the first or second stator beam.
